# EUROPÄISCHE PATENTSCHRIFT

(11) **EP 2 576 251 B1**
(45) Veröffentlichungstag und Bekanntmachung des Hinweises auf die Patenterteilung: **13.01.2016**
(21) Anmeldenummer: 11717962.2
(22) Anmeldetag: 03.05.2011
(51) Int. Cl.: B60H 1/00, F25B 49/00

(54) **VERFAHREN ZUR ÜBERWACHUNG DES KÄLTEMITTELFÜLLGRADES EINER KLIMAANLAGE**
METHOD FOR MONITORING THE COOLANT FILL LEVEL OF AN AIR CONDITIONER
PROCÉDÉ POUR SURVEILLER LE NIVEAU DE REMPLISSAGE DU RÉFRIGÉRANT D'UNE INSTALLATION DE CLIMATISATION

(30) Priorität: 01.06.2010 DE 102010029546
(43) Veröffentlichungstag der Anmeldung: 10.04.2013
(73) Patentinhaber: Bayerische Motoren Werke Aktiengesellschaft, 80809 München (DE)
(72) Erfinder: BERG, Karsten, 82319 Starnberg (DE); DANNER, Jasper, 81379 München (DE); SCHNEIDER, Florian, 82223 Eichenau (DE)
(74) Vertreter: Diener, Reinhold Jürgen
(86) Internationale Anmeldenummer: PCT/EP2011/002175
(87) Internationale Veröffentlichungsnummer: WO 2011/151001

(56) Entgegenhaltungen:
- EP-A1- 1 213 549
- EP-A2- 1 270 292
- DE-A1-102009 038 273
- US-A- 5 009 076
- US-A- 5 301 514

## Beschreibung

Die vorliegende Erfindung betrifft ein Verfahren zur Überwachung des Kältemittelfüllgrades einer Klimaanlage gemäß den Merkmalen des Patentanspruches 1.

Ein Verfahren zur Erkennung eines Kältemittelverlustes in einem Kältemittelkreislauf ist aus der EP 1 270 292 A2 bekannt, welche als nächster Stand der Technik angesehen wird. Sie offenbart die Merkmale des Anspruchs 1 mit Ausnahme des Verfahrensschrittes des
- Ermitteln einer momentanen Temperaturgröße des Kältemittelkreislaufs, indem
• die Temperatur des Kältemittels auf einer Niederdruckseite eines Verdichters der Fahrzeugklimaanlage oder
• die Temperatur des Kältemittels im Verdichter oder
• die Temperatur einer Elektronikplatine oder eines bestimmten Halbleiterbauelements des Verdichters gemessen wird,
. Zum technischen Hintergrund der vorliegenden Erfindung zählen ferner die DE 10 2009 038 273 A1, EP 1 213 549 A1, US 5 009 076 A sowie die US 5 301 514 A.

Fahrzeugklimaanlagen sollten stets hinreichend mit Kältemittel befüllt sein. Ist der Kältemittelfüllgrad zu niedrig, so kann die maximal mögliche Kälteleistung nicht erreicht werden. Im Übrigen besteht bei zu geringem Kältemittelfüllgrad die Gefahr, dass Schmieröl des Verdichters, welches in das Kältemittel übergeht, nicht hinreichend zum Verdichter zurückgefördert wird, was im ungünstigsten Fall zu einer Schädigung des Verdichters führen kann.

Aus der Forschung sind bereits verschiedene Konzepte zur Überwachung des Kältemittelfüllgrades bekannt, die allerdings eine relativ aufwändige Sensorik benötigen. Dies ist mit hohen Kosten verbunden, insbesondere dann, wenn Sensoren an Kältekreislaufkomponenten benötigt werden, die standardmäßig nicht an den Datenbus (z.B: LIN, CAN) des Fahrzeugs angeschlossen sind.

Aufgabe der Erfindung ist es, ein Verfahren anzugeben, mittels dem der Kältemittelfüllgrad einer Fahrzeugklimaanlage vergleichsweise einfach und kostengünstig überwacht werden kann.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Verfahren zur Überwachung des Kältemittelfüllgrades einer Klimaanlage, insbesondere einer Fahrzeugklimaanlage, bei dem der "Lastzustand" der Klimaanlage sowie eine momentane "Temperaturgröße" und eine momentane "Druckgröße" des Kältemittelkreislaufs ermittelt und anschließend überprüft wird, ob die "Temperaturgröße" und die "Druckgröße" außerhalb eines vorgegebenen, dem ermittelten Lastzustand zugeordneten Temperatur-/Druckbereichs liegen, wobei eine Fehlermeldung erzeugt wird, wenn dies der Fall ist.

Der oben eingeführte Verfahrensparameter "Lastzustand" ist eine komplexe Größe, die näherungsweise durch mindestens einen, vorzugsweise durch mehrere über einen vorgegebenen Algorithmus miteinander zu verknüpfende Eingangsparameter beschreibbar ist. Eingangsparameter, welche in den Algorithmus zur Ermittlung des momentanen Lastzustands der Klimaanlage eingehen können, sind z.B.
- die Umgebungslufttemperatur und/oder
- die Betriebsart, in der die Klimaanlage gerade betrieben wird, worunter insbesondere verstanden wird, ob die Klimaanlage im "Frischluftmodus" (Frischluft aus der Umgebung wird dem Fahrgastraum zugeführt) oder im "Umluftmodus" (die im Fahrgastraum befindliche Luft wird lediglich umgewälzt, ohne Frischluft zuzuführen) betrieben wird, und/oder
- die aktuell eingestellte Gebläseleistung eines Gebläses eines Klimageräts der Klimaanlage, und/oder
- die aktuelle Gebläseleistung eines im Bereich eines Kondensators der Klimaanlage angeordneten Gebläses bzw. Lüfters, und/oder
- die aktuelle Fahrzeuggeschwindigkeit, und/oder
- ob, im Falle einer Mehrverdampferklimaanlage, aktuell ein oder mehrere Verdampfer in Betrieb sind, und/oder
- die aktuelle Leistung bzw. die aktuelle Drehzahl des Verdichters der Fahrzeugklimaanlage.

Bei der "momentanen Druckgröße" handelt es sich um den Kältemitteldruck auf der Hochdruckseite des Verdichters der Klimaanlage. Dieser Druck wird unmittelbar mittels eines auf der Hochdruckseite des Verdichters angeordneten Drucksensors gemessen.

Die momentane Temperaturgröße wird durch die auf der Niederdruckseite des Verdichters herrschende Kältemitteltemperatur oder durch eine im Verdichter gemessene Kältemitteltemperatur gebildet.

Alternativ dazu könnte als Temperaturgröße auch eine Temperatur einer Elektronikplatine bzw. eines bestimmten Halbleiterbauelements des Kältemittelverdichters verwendet werden.

Gemäß der Erfindung können für eine Vielzahl von Lastzuständen zulässige Temperatur-/ Druckbereiche vorgegeben und in einem Speicher abrufbar gespeichert sein. Liegt der durch die momentane Temperaturgröße und die momentane Druckgröße gebildete Temperatur-/Druck-Vektor außerhalb des dem aktuellen Lastzustand zugeordneten zulässigen Temperatur- /Druckbereichs, so kann mit einer hinreichend großen Wahrscheinlichkeit davon ausgegangen werden, dass der Grund in einer Unterbefüllung oder

Überbefüllung des Kältemittelkreislaufs mit Kältemittel zu suchen ist. In einem derartigen Fall wird eine entsprechende Fehlermeldung ausgegeben und der Fahrer aufgefordert, eine Werkstatt aufzusuchen.

Ein wesentlicher Vorteil der Erfindung ist darin zu sehen, dass prinzipiell nur ein zur Ermittlung der momentanen Temperaturgröße geeigneter Temperatursensor benötigt wird. Ein Drucksensor zur Ermittlung der momentanen Druckgröße sowie Einrichtungen (Sensoren) zur Ermittlung des Lastzustands sind auch bei herkömmlichen Fahrzeugklimaanlagen bereits vorhanden, was im Ergebnis eine sehr einfache und kostengünstige Überwachung des Kältemittelfüllgrads ermöglicht.

Da der Verdichter auch bei herkömmlichen Fahrzeugklimaanlagen üblicherweise bereits über einen Datenanschluss zur Regelung des Verdichters verfügt, braucht keine zusätzliche Datenleitung vorgesehen zu werden.

Im folgenden wird das Grundprinzip der Erfindung im Zusammenhang mit der Zeichnung näher erläutert.

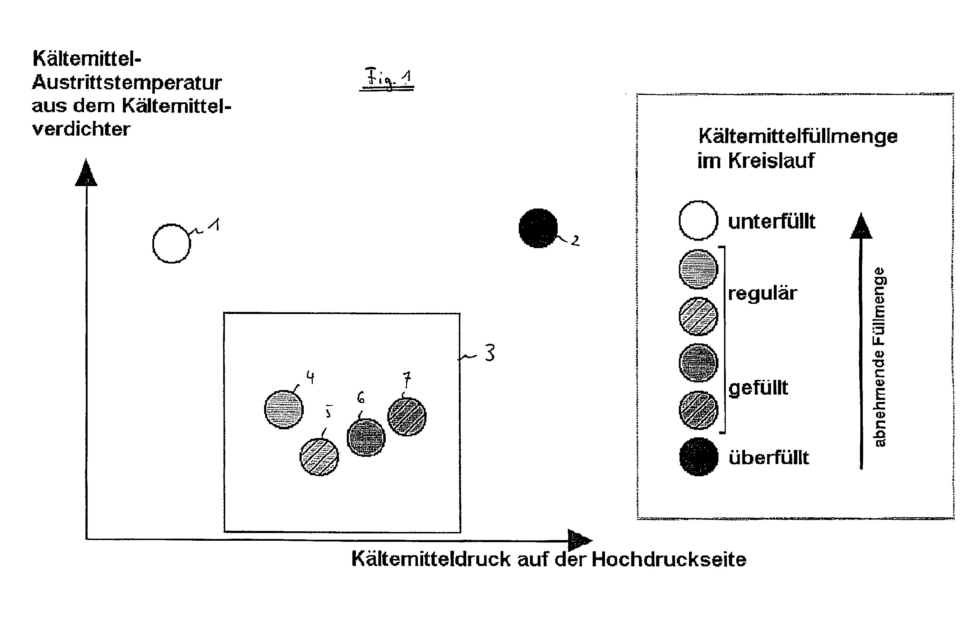

Fig. 1 zeigt ein Diagramm, in dem auf der Abszisse der Kältemitteldruck auf der Hochdruckseite des Verdichters aufgetragen ist. Auf der Ordinate kann, wie in Fig. 1 dargestellt, die Kältemitteltemperatur am Ausgang des Verdichters (Hochdruckseite) aufgetragen sein, oder alternativ dazu, die Kältemitteltemperatur am Eintritt in den Verdichter (Niederdruckseite) oder an der sauggasgekühlten Leistungselektronik eines Fahrzeugs.

Die eingezeichneten "Temperatur-/Druck-Punkte" repräsentieren die bei einem ganz bestimmten Lastzustand auftretenden Temperatur-/Druckverhältnisse. So beschreibt beispielsweise der Punkt 1 die Temperatur und den Druck, wenn die Klimaanlage zu wenig Kältemittel enthält. Punkt 2 beschreibt die Temperatur und den Druck, wenn die Klimaanalage mit zuviel Kältemittel befüllt wurde.

Der Rechteckbereich 3 beschreibt denjenigen Temperatur-/Druckbereich, der bei einem ganz bestimmten Lastzustand als "zulässig" angesehen wird. "Zulässig" bedeutet, dass der Kältemittelfüllgrad in einer akzeptablen Größenordnung liegt, d.h. weder zu niedrig noch zu hoch. Bei den Punkten 4 - 7, die alle innerhalb des "zulässigen Temperatur-/Druckbereichs" liegen, kann mit hoher Wahrscheinlichkeit davon ausgegangen werden, dass auch der Kältemittelfüllgrad in einer akzeptablen Größenordnung liegt. Wird bei dem vorliegenden Lastzustand hingegen ein momentaner Temperatur-/Druckpunkt ermittelt, der außerhalb des Rechteckbereichs 3 liegt, so ist von einer Unter- oder Überfüllung auszugehen. Die Überwachungselektronik gibt in einem solchen Fall eine entsprechende Fehlermeldung aus.

Wie bereits erwähnt, bezieht sich das Diagramm der Fig. 1 auf einen ganz bestimmten Lastzustand der Klimaanlage. In einem elektronischen Speicher einer Überwachungselektronik sind für eine Vielzahl von Lastzuständen bzw. für alle Lastzustände, die auftreten können, derartige "Diagramme" abgelegt, so dass in jedem Lastzustand näherungsweise anhand einer Temperaturgröße und einer Druckgröße überprüfbar abschätzbar ist, ob der Kältemittelfüllgrad in einer akzeptablen Größenordnung liegt oder nicht.

## Patentansprüche

1. Verfahren zur Überwachung des Kältemittelfüllgrades einer Klimaanlage, insbesondere einer Fahrzeugklimaanlage, mit folgenden Schritten:
- Ermitteln des Lastzustands der Klimaanlage,
- Ermitteln einer momentanen Temperaturgröße des Kältemittelkreislaufs, indem
• die Temperatur des Kältemittels auf einer Niederdruckseite eines Verdichters der Fahrzeugklimaanlage oder
• die Temperatur des Kältemittels im Verdichter oder
• die Temperatur einer Elektronikplatine oder eines bestimmten Halbleiterbauelements des Verdichters gemessen wird,
- Messen einer momentanen Druckgröße des Kältemittelkreislaufs, indem mittels eines auf der Hochdruckseite des Verdichters angeordneten Drucksensors der Druck des Kältemittels gemessen wird,
- Überprüfen, ob ein durch die Temperaturgröße und die Druckgröße definierter Temperatur-/Druckpunkt außerhalb eines vorgegebenen, dem momentanen Lastzustand zugeordneten Temperatur-/Druckbereichs liegt und
- Erzeugen einer Fehlermeldung, wenn dies der Fall ist.

2. Verfahren nach Anspruch 1,**dadurch gekennzeichnet, dass** der Lastzustand mittels eines vorgegebenen Algorithmus ermittelt wird, in den ein oder mehrere der folgenden Eingangsparameter eingehen:
- Lufttemperatur der Umgebung, und/oder
- Betriebsart der Klimaanlage, insbesondere, ob Frischluft- oder Umluftbetrieb eingestellt ist, und/oder
- aktuell eingestellte Gebläseleistung eines Gebläses eines Klimageräts der Klimaanlage, und/oder
- aktuelle Gebläseleistung eines im Bereich eines Kondensators der Klimaanlage angeordneten Gebläses und/oder
- aktuelle Fahrzeuggeschwindigkeit, und/oder
- ob im Falle einer Mehrverdampferklimaanlage aktuell ein oder mehrere Verdampfer aktiv sind
- aktuelle Leistung bzw. aktuelle Drehzahl des Verdichters.

## Claims

1. A method for monitoring the filling level of refrigerant of an air conditioning system, especially of an air conditioning system for a vehicle, comprising the following steps:
- determining the load state of the air conditioning system,
- determining a current temperature variable of the refrigerant circuit, by measuring
• the temperature of the refrigerant on a low-pressure side of a compressor of the vehicle air conditioning system or
• the temperature of the refrigerant in the compressor or
• the temperature of an electronic circuit board or of a particular semiconductor component of the compressor,
- measuring a current pressure variable of the refrigerant circuit by measuring the pressure of the refrigerant using a pressure sensor arranged on the highpressure side of the compressor,
- checking whether a temperature point/pressure point defined by the temperature variable and by the pressure variable lies outside a predetermined temperature range/pressure range associated with the current load state, and
- generating an error message if this is the case.

2. A method according to claim 1, **characterised in that** the load state is determined by a predetermined algorithm into which one or more of the following input parameters are entered:
- ambient air temperature, and/or
- type of operation of the air conditioning system, especially whether fresh air operation or recirculating air operation is set, and/or
- currently set output of a fan of an air conditioning device of the air conditioning system, and/or
- current output of a fan arranged in the region of a condenser of the air conditioning system and/or
- current vehicle speed, and/or
- whether, in the case of a multi-evaporator air conditioning system, one or more evaporators are currently active
- current output or current speed of the compressor.

## Revendications

1. Procédé permettant de surveiller le niveau du fluide de refroidissement dans une installation de climatisation en particulier d'un véhicule comprenant les étapes consistant à :
- déterminer l'état de charge de l'installation de climatisation,
- déterminer une grandeur de température instantanée du circuit de fluide de refroidissement en mesurant,
• la température du fluide de refroidissement du côté basse-pression d'un compresseur de l'installation de climatisation, ou
• la température du fluide de refroidissement dans le compresseur, ou
• la température d'une platine électronique ou d'un composant semi-conducteur déterminé du compresseur,
- mesurer une grandeur de pression instantanée dans le circuit de fluide de refroidissement en mesurant la pression du fluide de refroidissement au moyen d'un capteur de pression monté du côté haute-pression du compresseur,
- vérifier si un point de température / pression défini par la grandeur de température et la grandeur de pression est situé en dehors d'une plage de température / pression prédéfinie associée à l'état de charge instantané, et
- émettre un message de défaut lorsque tel est le cas.

2. Procédé conforme à la revendication 1,
**caractérisé en ce que**
l'état de charge est déterminé au moyen d'un algorithme prédéfini dans lequel interviennent un ou plusieurs des paramètres d'entrée suivants :
- température de l'air environnant, et/ou
- mode de fonctionnement de l'installation de climatisation, en particulier si le fonctionnement avec de l'air frais ou de l'air de circulation est réglé, et/ou
- puissance de soufflage actuellement réglée d'un ventilateur d'un appareil de climatisation de l'installation de climatisation, et/ou
- puissance de soufflage actuelle d'un ventilateur monté dans la zone d'un condensateur de l'installation de climatisation, et/ou
- vitesse actuelle du véhicule, et/ ou
- si dans le cas d'une installation de climatisation comportant plusieurs évaporateurs, un ou plusieurs évaporateurs sont actuellement actifs,
- puissance actuelle ou vitesse de rotation actuelle du compresseur.
